# EUROPEAN PATENT APPLICATION

(11) **EP 4 821 624 A1**
(43) Date of publication of application: **14.10.2026**
(21) Application number: 25168807.3
(22) Date of filing: 07.04.2025
(51) Int. Cl.: B23D 61/02

(54) **DOUBLE CUTTING DISC WITH DEFORMATION ELEMENTS ARRANGED ALONG CURVED IMAGINARY LINES**

(71) Applicant: Technische Universität München, in Vertretung des Freistaates Bayern, 80333 München (DE)
(72) Inventor: MÄDER, Marcus, 80686 Munich (DE)
(74) Representative: Lucke, Andreas

(57) **Abstract**

The invention refers to a rotary cutting disc (10) comprising two coaxial mutually opposed disc-shaped elements (12a, 12b) each having a circumferential edge. The circumferential edges (14a, 14b) of the disc-shaped elements (12a, 12b) are joined together forming a cutting edge (16) of the cutting disc (10). Each of the disc-shaped elements (12a, 12b) comprises deformation elements (32) arranged along one or more at least partly curved elongated imaginary lines (30), wherein the one or more imaginary lines (30) have a radial distance from the centre (26) of the cutting disc (10) that increases along at least a part of the length of the deformation line (30). The deformation elements (32) can be discontinuously arranged along the one or more at least partly curved elongated imaginary lines (30). The invention further refers to a cutting tool machine comprising such a rotary cutting disc (10) and a motor (50) for driving a rotation of the rotary cutting disc.

## Description

### FIELD OF THE INVENTION

The present invention is related to a cutting disc or diamond blade for cutting materials. More particularly, the present invention relates to a cutting disc with a novel configuration allowing for improved dynamical properties of the cutting disc in operation.

### BACKGROUND OF THE INVENTION

Rotary cutting discs are widely employed in different fields of technology for cutting purposes. Cutting discs of relatively small dimensions in the submillimetric range are used for medical purposes, for example in the field of odontology. Cutting discs having diameters in a range from approximately 50 cm to as large as 2 m are used for instance in the fields of metallurgy, civil construction and wood processing for cutting a variety of materials.

In a continued effort to increase the efficiency of cutting operations by cutting tools making use of cutting discs, manufacturers of cutting discs aim at an increasingly thinner shape thereof. Thinner cutting discs generally allow cutting through objects in shorter times and with less power consumption, as less material of the object being cut needs to be removed. However, these efforts are faced with technical limitations with regard to the mechanical properties of the tool and its dynamic behaviour in operation, for the cutting disc must maintain structural integrity, dynamic stability and withstand centrifugal and transversal forces.

Rotating machinery, as any dynamical system, is exposed to vibrations and deformations depending for instance upon structural properties thereof, possible functioning faults and force imbalances. A thin rotary cutting disc rotating in a physical environment may severely deform when subjected to loss of dynamical stability and to arising resonances. This may result in a widening and a deviation of the intended cutting line, such that the final cutting line may in some instances be several times wider than the width of the cutting disc, which leads to increased material consumption, reduced cutting precision, increased wear of the cutting disc and increased power consumption. Further, this undesired stability loss may lead to fatal mechanical disruptions of the cutting disc itself or the surrounding machinery as a result of increased forces transversal to the cutting line. For example, the cutting disc may penetrate sideways into the material being cut along a direction perpendicular to the cutting line, which may cause severe damage to the cutting disc or cause the cutting disc to remain trapped and/or bent upon turning off the cutting machine.

It is seen in practice that there is typically a rotation frequency above which the disc of the cutting machine exhibits a large deformation, leading to an undesired increase in the width of the cut, excessive wear or even breakage of the disc upon operation. This frequency is referred to as "critical frequency" herein. Clearly, by restricting the rotational speed of the cutting disc to frequencies below this critical frequency, the efficiency of the cutting tool is likewise limited. Hence, there is a strong demand in the art to provide cutting discs with an extended range of operable rotational speeds.

JP Ho2 311260 A discloses a disc-shaped cutting blade that comprises a pair of steel plates and a viscoelastic resin disposed between the steel plates that separates the steel plates from each other throughout their radial extension. The steel plates can be welded together using welding spots arranged along a ring-shaped imaginary line having a constant radial distance from the centre of the cutting disc.

JP H06 312314 A discloses a cutter substrate that consists of three steel plates having different natural frequencies, wherein an intermediate steel plate comprising a large number of pores being interposed between the other two steel plates. The pores are not disclosed as being arranged in any specific order.

CN 101 518 838 A and CN 201 471 006 U disclose a saw blade matrix that comprises a left steel disc, a right steel disc, and a noise reduction layer interposed between the left steel disc and the right steel disc. The noise reduction layer is laser welded between the left steel disc and the right steel disc such that the left steel disc, the noise reduction layer, and the right steel disc are bonded together by means of the noise reduction layer. The saw blade matrix can comprise through holes positioned on a ring-shaped imaginary line at a constant radial distance from the centre of the cutting disc.

JP H03 104608 A discloses a disc-shaped rotary substrate comprising two thin unit plates that are bent outwardly away from each other at a peripheral side to support a cutting tip.

A rotary cutting disc comprising two coaxial mutually opposed disc-shaped elements, each having a circumferential edge, wherein circumferential edges of the disc-shaped elements are joined together forming a cutting edge of the cutting disc, and wherein each of the disc-shaped elements comprises one or more at least partly curved deformation lines having a radial distance from the centre of the cutting disc that increases along at least a part of the length of the imaginary line is known from EP 3 417969.

### SUMMARY OF THE INVENTION

It is an object of the present invention to provide an advantageous development of the rotary cutting disc disclosed by the same inventor in EP 3 417 969. Thus, a rotary cutting disc for a cutting tool machine with an improved structural stability is herewith provided, which overcomes the technical disadvantages of the prior art mentioned hereinabove, allows for an increased maximal feasible rotational speed of the cutting disc, and further reduces manufacturing costs and complexity as compared to the solution previously known from EP 3 417 969 A1. This is achieved by a cutting disc according to claim 1 and by a cutting tool machine according to claim 15. Preferable embodiments of the invention are captured by the dependent claims.

The dynamical stability of the cutting disc is governed by its vibrational modes. Namely, as any mechanical object with some degree of elasticity, the cutting disc will exhibit certain vibrational modes in which the cutting disc can exhibit standing wave deformation vibrations at corresponding mode frequencies. These modes are usually referred to as "resonances" in the art, and the corresponding frequency is referred to as the "resonance frequency" or, from a mathematical perspective, "eigenfrequency" of the disc.

When the disc is at rest, i.e. not rotating, the formation of the vibrational modes is well understood, and the shape and frequency of the vibrational modes may be predicted using empirical measurements or suitable computer simulations. However, when the disc is rotating, the situation becomes more complicated. It is seen that individual vibrational modes of the disc when at rest split up into two vibrational modes for the rotating disc, when observed from the stationary reference frame, i.e. the reference frame of the object to be cut by the rotating disc. This split leads to one vibrational mode with higher and one vibrational mode with lower frequency than the mode frequency of the cutting disc at rest. The mode frequencies are found to diverge with increasing rotational speed, and it is seen that at some rotation frequency, which corresponds to the "critical frequency" referred to in the introductory portion above, the resonance frequency of one of the "split modes" becomes zero. This means that, as observed from the stationary reference frame, the cutting blade becomes statically deformed, and in this case the cutting blade is no longer operable for obvious reasons, as it would no longer "fit" into a cut of normal size. Accordingly, the aforementioned "critical frequency" indeed sets an upper limit for the rotational speed of the cutting blade in operation, and thereby an upper limit for the cutting efficiency.

An intuitive way to understand the split-up of the vibrational modes upon rotation of the disc is as follows. As the skilled person is aware, a vibrational mode is essentially a standing wave, which is in turn the result of the superposition of two counter directional waves. In the case of a disc, a standing wave can be generated by circumferential deformation waves propagating in clockwise and counter clockwise directions, respectively. When the disc rotates e.g. in clockwise direction, as observed from the stationary frame of reference, the speed of the waves propagating in clockwise direction is increased, while the speed of the wave propagating in counter clockwise direction is decreased, such that a split of the resonance frequencies may not come as a surprise. However, the analysis of the true behaviour is more complicated, because the rotation of the disc is an accelerated motion, and the disc itself therefore cannot serve as an inertial frame of reference. In order to understand the dynamical behaviour of the rotating disc, one can therefore not simply solve the equations of motions for the vibrations of the disc at rest and then transform the resulting dynamic behaviour with a simple rotation in space. Instead, in order to properly analyse the vibrational behaviour of the rotating disc, the full continuum mechanics problem of the rotating disc has to be solved.

The present inventor has carried out new measurements of this full continuum mechanics problem regarding the deformation of the rotating disc, as he previously did for the solution disclosed in EP 3 417 969 A1, and was again able to determine the vibrational modes, as well as the corresponding frequencies, as a function of the rotational speed. With this insight into the dynamical behaviour of the continuum mechanics of the rotating disc, the inventor was able to establish a new design for a cutting disc, as set forth in claim 1 below, that permits increasing the critical frequency considerably as compared to discs of conventional design, while reducing manufacturing costs and complexity as compared to the solution previously known from EP 3 417 969 A1.

More particularly, a rotary cutting disc according to the invention comprises two coaxial mutually opposed disc-shaped elements each having a circumferential edge, wherein circumferential edges of the disc-shaped elements are joined together forming a cutting edge of the cutting disc. Thus, the cutting disc is formed by the union of the two disc-shaped elements, wherein each disc-shaped element constitutes one half of the cutting disc. The circumferential edges of the disc-shaped elements may be joined together forming a common circumferential edge that constitutes the cutting edge of the cutting disc, that is, the outermost edge of the cutting disc that is rotated against the material to be cut. The cutting edge may constitute the cutting surface of the cutting disc itself or may be used for accommodating any kind of cutting blades, teeth or the like on it.

It is noteworthy that, while reference is made herein to a cutting disc comprising two coaxial mutually opposed disc-shaped elements, configurations of the invention are foreseen in which the cutting disc comprises more than two disc-shaped elements. Further, as is clear to the skilled person, the term "disc-shaped" should not be construed to be restricted to perfectly planar and circular objects, but rather to extended objects having an outermost perimeter that may deviate from a perfect circle and having a thickness that is much smaller than the aforesaid perimeter.

The two disc-shaped elements need not be continuously in contact with each other all along their respective radial length, but may instead be in contact, possibly in direct contact, with each other at their outermost circumferential edges, possibly only there and possibly also in a neighbouring environment thereof, with such outermost circumferential edges jointly form the cutting edge of the cutting disc.

Each of the disc-shaped elements comprises deformation elements arranged along one or more at least partly curved elongated imaginary lines, wherein the one or more imaginary lines have a radial distance from the centre of the cutting disc that increases along at least a part of the length of the deformation line. The "imaginary lines" are not materially-based lines, but theoretical (imaginary) lines along which the different deformation elements formed on the disc-shaped elements are arranged. Herein, "curved" refers to the fact that the imaginary lines do not extend straight along the radial direction of the disc-shaped elements only, but rather have a radial component and a component perpendicular thereto (i.e. angular or circumferential component). "Partly curved" refers to the fact that such curved shape may correspond to the entire length of a imaginary line or only to a portion thereof. The fact that the radial distance of the imaginary lines increases along at least a part of the length of the imaginary line implies that imaginary lines according to this invention are not formed at a constant distance of the centre of the cutting disc, i.e. are not ring-shaped around the centre of the disc. In terms of polar coordinates, the radial component of the imaginary line would be dependent on the azimuthal phase. The imaginary lines may for instance have a spiral form, a wavy form, any combination thereof, or any other partly curved form according to the above definition.

The deformation elements may be discontinuously arranged along the one or more at least partly curved elongated imaginary lines, possibly at regular or increasing or decreasing distances between neighbouring deformation elements along a given imaginary line. Forming the deformation elements discontinuously may considerably simplify the process of providing the rotary cutting disc with the required dynamical properties, in particular as compared to solutions using continuously formed deformation lines.

According to preferred embodiments, the deformation elements may comprise welding spots. Accordingly, forming the deformation elements may comprise forming a plurality of welding spots along the one or more at least partly curved elongated imaginary lines. Preferably, the welding spots may be point-shaped, i.e. circular, oval-shaped, or elongated. The welding spots may be formed by welding the corresponding disc-shaped element, in particular an external surface thereof, with a substantially circular laser spot. Depending on whether the laser spot forming the deformation element is moved along the corresponding imaginary line and for which distance, the final shape of the welding spot will be circular (no movement of the laser spot), oval (short movement of the laser spot) or elongated (long movement of the laser spot).

A sequence of deformation elements having regular dimensions, in particular regular extension along the corresponding imaginary line, and regular separation between each two consecutive deformation elements, may be formed by moving the laser spot along the respective imaginary line, possibly at constant speed, and optionally by setting a duty cycle corresponding to a desired separation between each two consecutive deformation elements along the imaginary line.

A number of deformation lines, possibly of welding spots, may be formed long each of the imaginary lines, which number may for example be 2, 3, 4, 5, 6, 7, 8, 10, 15, 20 or more. Different or equal numbers of deformation elements may be arranged along different ones of the imaginary lines.

Preferably, the welding spots may weld the two disc-shaped elements together. Thus, the welding spots may be used for fixing the disc-shaped elements to each other.

Additional welding spots, which need not be arranged along the imaginary lines, may be provided, which may preferably also weld the two disc-shaped elements together.

Such additional welding spots may be arranged along an outermost and/or innermost circumference of each of the two disc-shaped elements, for example along a ring-shaped line surrounding the centre of the disc, wherein "along an outermost and/or innermost circumference" may refer to a radial distance from outermost or innermost edges of the disc-shaped elements, respectively, of not more than 15%, preferably of not more than 10% the radius of the disc-shaped elements. The presence of such additional welding spots may confer additional stability and improved acoustic properties to the cutting disc of the invention.

In some embodiments, the disc-shaped elements may be free from deformation elements other than the deformation elements arranged along one of the imaginary lines and other than the aforementioned optional additional welding spots.

Additionally or alternatively, the deformation elements may be mechanically formed, possibly as deformations of the material of which the disc-shaped elements are made. The deformation elements may be formed by exerting a mechanical pressure upon the material from both sides of the disc-shaped elements of the cutting disc thereby causing a plastic deformation. The deformation elements may for example be formed by a rolling process using a correspondingly configured tooth wheel.

Irrespectively of whether the deformation elements are formed with a laser or mechanically, the deformation elements will have a certain non-vanishing width in a direction perpendicular to the corresponding imaginary line, which may however be much smaller than the extension of the deformation element along the imaginary line, for example at least 5 or 10 times smaller, typically at least 20 times smaller. The formation of the deformation elements causes so-called residual stresses to be present in the material, which has a relevant influence on the dynamical properties of the cutting disc.

The inventor has realised that, similarly to what was observed in in EP 3 417 969 A1, surprisingly the combination of the two-element design with the specific arrangement of the deformation elements along the imaginary lines causes an increase of the critical speed of the cutting disc in a synergistic manner, i.e. in a manner that exceeds by far the effect expected from each single design feature by itself. However, in this case production and manufacturing complexity and costs can be significantly reduced as compared to the solution presented in in EP 3 417 969 A1 by using deformation elements arranged along the imaginary lines The increase in critical speed thanks to the cutting disc of the invention with respect to an analogous single-pieced cutting disc having the same diameter and total mass and having conventional annular imaginary lines was found to be of at least 33%, which results in a very significant increase in the cutting kinetical energy of more than 75%. This way, the efficiency of a cutting operation with a cutting disc can be improved while maintaining acceptable levels of quality, cutting precision and safety. The aforesaid conclusions are supported by experimental results that are summarised below.

The dynamic behaviour of the cutting disc is governed by the rotational inertia tensor thereof. The rotational inertia tensor, also known as angular mass tensor, of a system describes the rotational inertia of the system and the degree to which a rotation around one axis induces a rotation around another axes, as is typically known for precession phenomena. The rotational inertia tensor Jᵢⱼ is a symmetric tensor of the form $J = \left[\begin{matrix}{J}_{xx} & {J}_{xy} & {J}_{xz} \\ {J}_{xy} & {J}_{yy} & {J}_{yz} \\ {J}_{xz} & {J}_{yz} & {J}_{zz}\end{matrix}\right] ,$ where the diagonal terms Jₓₓ, J_{yy}, and J_{zz}, characterise the rotation inertia of the corresponding system around the axis x, y, and z, respectively, and the off-diagonal terms characterise the degree to which a rotation around one axis induces a rotation around another axis. In other words, the off-diagonal terms are a measure of the "rotation rigidity" of a rotating system. The smaller an off-diagonal term J_{αβ} is, the less resistance the system offers for a rotation around the direction α to induce a further rotation around the direction β, and hence the less stable the system is when rotating.

The experiments by the inventor revealed that the aforesaid combination of the two element design with the specific shape of the imaginary lines may influence the deformation behaviour of the cutting disc in such a way as to result in an increase in the off-diagonal terms of the rotational inertia tensor with respect to cutting discs of conventional design in as much as four orders of magnitude. While conventional cutting discs display off-diagonal terms of the inertia tensor having a typical order of magnitude of 10⁻¹³ as compared to the diagonal terms, the inventor found out that the inventive design of a cutting disc can result in off-diagonal terms of the rotational inertia tensor of the cutting disc having an order of magnitude of 10⁻⁹ or higher as compared to the diagonal terms. This may lead to a regime in which the deformation behaviour of the cutting disc may no longer be reliably approximated by a linear planar approximation, as would correspond to a symmetric and plane cutting disc. Instead, quadratic and higher terms become significant for the calculations, which contributes to the effective increase of the critical frequency of the cutting disc.

Thus, experiments by the inventor reveal that the advantageous dynamic behaviour that was previously observed for the rotary cutting disc disclosed in EP 3 417 969 A1 can also be achieved by a configuration according to the present invention, with the additional advantage of reduced manufacturing costs and reduced manufacturing complexity.

Further, the configuration according to the present invention was found to result in higher stability of the cutting disc during use as well as to improved bonding between the disc-shaped elements and possibly between the disc-shaped elements and a separating element arranged between the disc-shaped elements.

In a preferred embodiment of the invention, the two disc-shaped elements may form a cavity between the two disc-shaped elements that contains a vacuum. According to this embodiment, the two disc-shaped elements are not continuously in contact with each other all along their respective radial length but instead are in contact with each other at their outermost circumferential edges, which jointly form the cutting edge of the cutting disc, and possibly in a neighbouring environment thereof, while they are mutually separated along the rest of their radial extensions corresponding to those portions of the disc-shaped elements that are not joined together forming the cutting edge of the cutting disc. An interspace between the two disc-shaped elements is then formed between these portions thereof which constitutes the cavity.

The cutting edge of the cutting disc may be provided by a sealed junction or a sealed connection between the disc-shaped elements. Further, the disc-shaped elements may be confined by an innermost circumferential edge around their common axis, which may for instance be formed around an opening suitable for accommodating a shaft. A sealed junction or sealed connection may be provided between such an opening and the cavity between the disc-shaped elements, such that the cavity is a sealed cavity suitable for containing a vacuum. When the cavity is evacuated, i.e. it contains a vacuum, a pressure gradient is created between the interior of the cutting disc and the exterior thereof, which is believed to contribute to a better dynamical stability of the cutting disc in operation.

According to other preferred embodiments of the invention, the two disc-shaped elements may form a cavity between the two disc-shaped elements that is filled with a fluid, preferably with a Newtonian or a non-Newtonian fluid such as a gas-like air, an inert gas or a combination thereof, or a liquid like water, an oil, a gel-like substance or a combination thereof that improves the dynamic behaviour of the disc.

In other preferred embodiments of the invention, the two disc-shaped elements may form a cavity between the two disc-shaped elements that is filled with a damping material, preferably with a damping material with viscoelastic properties such as rubber, silicate, a gel, a synthetic or natural material with vibration attenuating properties or a combination thereof.

The presence of a vacuum, a fluid, or a damping material in the cavity may modify the dynamical properties of the cutting disc in an advantageous manner by increasing the damping behaviour and/or its mechanical resistance to uncontrolled deformations that may lead to deviations or irregularities of the cutting profile and contribute to the elevation of the critical rotational speed of the cutting disc.

In preferred embodiments of the invention, the disc-shaped elements may be separated by a separating element. The separating element may contribute to a better static and dynamic stability of the cutting disc against deformations and vibrations. The separating element may be formed as an extension of the disc-shaped elements. Alternatively, the separating element may be an independent element. Further, the separating element may be formed along an inner circumferential edge of the disc-shaped elements and around an opening confined by said inner circumferential edge for receiving a shaft.

In some preferred embodiments of the invention, the separating element and/or the disc-shaped elements may be configured such that the disc-shaped elements assume a lens-shaped geometry, wherein the distance between the disc-shaped elements increases at least in part along the radial direction from the cutting edge towards the centre of the cutting disc. The distance between the disc-shaped elements may increase throughout their respective radial lengths or in a part thereof. The disc-shaped elements may assume the lens-shaped geometry in combination, such that the geometry of the rotary cutting disc is lens-shaped in the aforesaid sense. This may be achieved by appropriately choosing the dimensions and material composition of the separating element and/or by appropriately choosing the dimensions and/or the material composition of the disc-shaped elements.

The inventor realised that the lens-shaped geometry induced by the separating element and/or by the disc-shaped elements may further contribute to the aforementioned non-linear regime of the deformation behaviour of the cutting disc and hence to the increase of the critical frequency of the cutting disc.

For the purpose of implementing the lens-shaped geometry of the cutting disc described above, the separating element may be made of a monolithic material, for example a metal, or a composite material, and may have a width along the axial direction, i.e. an extension between the disc-shaped elements, of between R/1000 and 2R/3, preferably between R/100 and R/2, more preferably between R/10 and R/3, where R is the radius of the disc-shaped elements. Additionally or alternatively, the disc-shaped elements may be made of a monolithic material, for example a metal, or a composite material.

The distance between the disc-shaped elements may increase along the radial direction from the cutting edge towards the center of the cutting disc, throughout their respective radial lengths or in a part thereof, linearly, logarithmically, exponentially, and/or according to a polynomial function, a trigonometric function and/or a rational function.

In a preferred embodiment of the invention, the one or more imaginary lines formed on different disc-shaped elements are arranged in an overlaying configuration in the assembled state of the cutting disc. This means that the imaginary lines as formed on the individual disc-shaped elements are mirror images of one another. Additionally, the deformation elements formed on different disc-shaped elements may be arranged in an overlaying configuration in the assembled state of the cutting disc, such that the deformation elements formed on the individual disc-shaped elements are mirror images of one another.

In a related embodiment, the pattern of imaginary lines, and possibly also the deformation elements, on the individual disc-shaped elements may be mirror images of one another, such that they could be arranged in an overlaying configuration in the assembled state of the rotary cutting disc, but possibly being offset with respect to each other by a predefined angle. The offset of the imaginary lines, and possibly also of the deformation elements, may lead to an increased degree of asymmetry of the cutting disc, which may further contribute to influence the deformation behaviour of the cutting disc in such a way as to increase the critical frequency of the cutting disc, as explained above.

According to an alternative embodiment of the invention, the pattern of imaginary lines, and possibly also of the deformation elements, as formed on the individual disc-shaped elements may be identical. This means that in the assembled state, where the individual disc-shaped elements are arranged back-to-back, the location and shape of the imaginary lines are mirror images of each other.

In some preferred embodiments of the invention, the one or more deformation elements are formed on an outer surface of the disc-shaped element not facing the opposed disc-shaped element.

According to a preferred embodiment of the invention, the radial distance of the one or more imaginary lines increases monotonically along the length of the deformation line. The radial distance may refer herein to the radial coordinate that would be used for describing the path of a imaginary line on a disc-shaped element in polar coordinates, which would increase monotonically with increasing angle, i.e. along the length of the deformation line. This characteristic may extend to an entire imaginary line or only to a portion thereof. The monotonic increase may for instance correspond to a linear increase or to a logarithmic increase, although other increase rates are possible as well.

In a preferred embodiment of the invention, the imaginary lines extend from a first end, corresponding to a radially innermost deformation element, to a second end, corresponding to a radially outermost deformation element, said first end being located within a distance of an innermost circumferential edge of the disc-shaped element that is less than 15%, preferably less than 10% of the diameter of the respective disc-shaped element. The disc-shaped elements may be confined on one side by an innermost circumferential edge around their common axis, which may for instance be formed around an opening suitable for accommodating a shaft.

In a related embodiment of the invention, the aforesaid second end of the imaginary lines may be located at the cutting edge, or within a distance from said cutting edge that is less than 15%, preferably less than 10% of the diameter of the respective disc-shaped element.

In a preferred embodiment of the invention, the two disc-shaped elements may be welded, soldered or glued together. In particular, the disc-shaped elements may be welded together by means of point welding, line welding, friction welding, soldering, or glued together using a gluing paste. In some embodiments, welding elements, soldering elements or gluing elements used for welding, soldering or gluing together the two disc-shaped elements, respectively, may be different from the deformation elements. However, in other embodiments, at least some of the deformation elements, possibly all of them, may be used for welding, soldering or gluing together the two disc-shaped elements.

In some embodiments, the two disc-shaped elements may be glued together, at least for a radial section thereof, using an adhesive arranged between the two disc-shaped elements. The adhesive may be or may comprise a double-sided, preferably ring-shaped adhesive tape. The adhesive may be or may comprise a viscoelastic material. Thus, the adhesive may combine a fixating function for fixating the two disc-shaped elements together with a damping function for improving the acoustic and dynamical properties of the cutting disc of the invention.

According to a preferred embodiment of the invention, each of the disc-shaped elements comprises at least 3 imaginary lines, preferably between 6 and 20 imaginary lines. Each of the imaginary lines may comprise a corresponding plurality of deformation elements arranged thereon.

In a preferred embodiment of the invention a portion of the imaginary lines extending between a radially innermost deformation element and a radially outermost deformation element, when expressed in polar coordinates, may cover an angular range between 1° and 720°, preferably between 10° and 90°, along their length.

Herein, it is preferable if the value of the angle coordinate increases or decreases monotonically along the length of the imaginary line. Additionally or alternatively, the imaginary lines preferably have the shape of a section of a circle having a centre located at a radial distance from the centre of the rotary cutting disc corresponding to 35% to 65%, preferably 40% to 60% and most preferably 45% to 55% of the radius of the rotary cutting disc.

A further aspect of the invention refers to a cutting tool machine comprising a rotary cutting disc according to any of the previously discussed embodiments of the invention and a motor for driving a rotation of the rotary cutting disc, wherein the motor may preferably be an electric motor. The use of an electric motor is particularly advantageous for overall noise reduction.

### BRIEF SUMMARY OF THE FIGURES

- Fig. 1: shows a side sectional view of a cutting disc according to the prior art invention.
- Fig. 2: shows a front view of a first reference cutting disc configuration.
- Fig. 3: shows a front view of a second reference cutting disc configuration.
- Fig. 4: shows a front view of a third reference cutting disc configuration.
- Fig. 5: shows a front view of a cutting disc configuration according to the invention.
- Fig. 6: shows compared results of structural vibrations measurements for the first to third reference cutting disc configurations of Figs. 1 to 3 and for the cutting disc configuration according to the invention of Fig.

### DESCRIPTION OF PREFERRED EMBODIMENTS

Certain embodiments of the present invention are described in detail herein below with reference to the accompanying drawings, wherein the features of the embodiments can be freely combined with each other unless otherwise described. However, it is to be expressly understood that the description of certain embodiments is given by way of example only, and that it should not be understood to limit the invention.

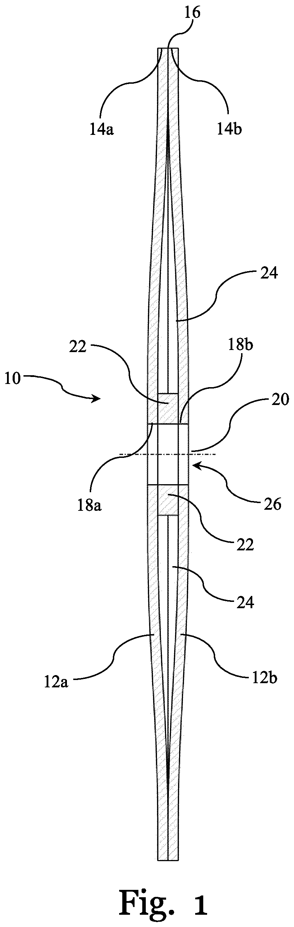

Fig. 1 shows a side view of a rotary cutting disc 10 according to an embodiment of the invention, which comprises two coaxial mutually opposed disc-shaped elements 12a and 12b. The disc-shaped elements 12a and 12b have a respective circumferential edge 14a and 14b. The circumferential edges 14a and 14b of the disc-shaped elements 12a and 12b are joined together forming a cutting edge 16 of the cutting disc 10. The disc-shaped elements 12a and 12b are in contact, possibly in direct contact, with each other around their outermost circumferential edges 14a and 14b and/or in neighbouring radial region.

The disc-shaped elements 12a, 12b extend between a respective innermost circumferential edge 18a, 18b of the disc-shaped elements 12a, 12b and the respective outermost circumferential edge 14a, 14b. The innermost circumferential edges 18a, 18b are arranged around their common centre 20, and form an opening 26 suitable for receiving a driving shaft. The disc-shaped elements 12a and 12b are separated in a vicinity of their innermost circumferential edges 18a, 18b by an optional separating element 22.

The circumferential disc-shaped elements 12a and 12b are tightly joined together at the cutting edge 16 and can be tightly joined to the optional separating element 22 and the outer walls of the opening 26, thereby forming a sealed cavity 24 between the disc-shaped elements 12a and 12b in some embodiments. In some embodiments, the cavity 24 contains a vacuum. In other related embodiments, the cavity 24 can be filled with a fluid or with a damping material (not shown). Such fluid can be a Newtonian or a non-Newtonian fluid such as a gas-like air, an inert gas or a combination thereof, or a liquid like water, an oil, a gel-like substance or a combination thereof. The damping material can be a damping material with viscoelastic properties such as rubber, silicate, a gel, a synthetic or natural material with vibration attenuating properties or a combination thereof.

The optional separating element 22 and the disc-shaped elements 12a and 12b are configured such that the disc-shaped elements 12a and 12b assume in combination a lens-shaped geometry, wherein the distance between the disc-shaped elements 12a and 12b increases along the radial direction from the cutting edge 16 towards the common centre 20, according to a tangent function. The optional separating element 22 can be made of a monolithic metal and can have a width of R/5, R being the radius of the disc-shaped elements 12a and 12b. The disc-shaped elements 12a and 12b are possibly made of a metal.

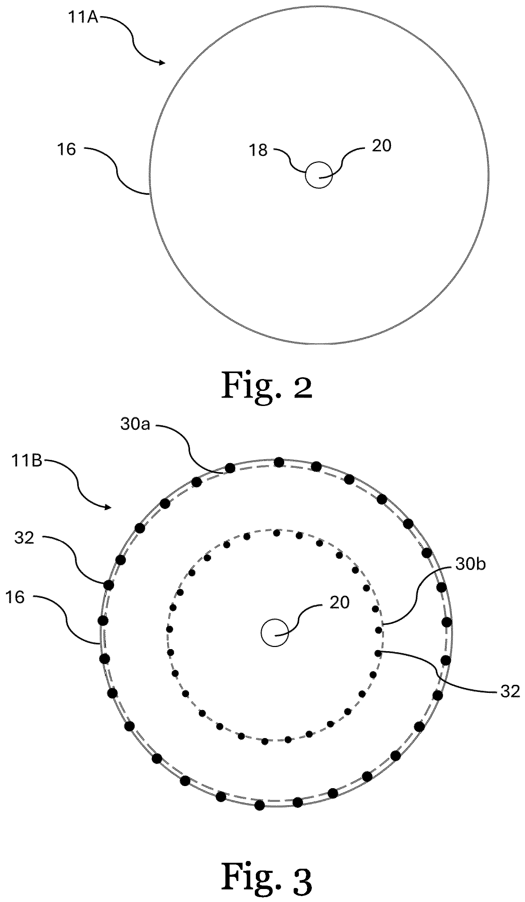

Fig. 2 shows a front side of a rotary cutting disc 11A according to a first reference configuration, which will be compared herein to a rotary cutting disc according to the invention. The front side of Fig. 2 can correspond to a rotary cutting disc having a cross-sectional side view as shown in Fig. 1 and can correspond to the outer surface of any of the first and second disc-shaped elements 12a and 12b.

As shown in Fig. 2, the rotary cutting disc according to the first reference configuration comprises no deformation elements formed on the disc-shaped elements 12a, 12b thereof. Instead, the outer surface of each of the disc-shaped elements 12a and 12b extends flat from the innermost circumferential edge 18, proximal to the centre 20, to the outermost edge 16. The disc-shaped elements 12a and 12b of the cutting disc of Fig. 2 can be mutually joined by having their circumferential edges 14a and 14b welded to each other.

Fig. 3 shows a front side of a rotary cutting disc 11B according to a second reference configuration, which will be compared herein to a rotary cutting disc according to the invention. The front side of Fig. 3 can correspond to a rotary cutting disc having a cross-sectional side view as shown in Fig. 1 and can correspond to the outer surface of any of the first and second disc-shaped elements 12a and 12b.

As shown in Fig. 3, the rotary cutting disc according to the second reference configuration comprises deformation elements 32 formed on the outer surfaces of the disc-shaped elements 12a, 12b thereof along two circular, ring-shaped imaginary lines 30a and 30b surrounding the centre 20 at two different radial distances, with the imaginary line 30a enclosing the imaginary line 30b. The imaginary line 30a is formed in a neighbouring region of the outermost circumferential edge 16, possibly at a given radial distance from the radial position of the circumferential edge 16.

The deformation elements 32 are discontinuously arranged along each of the imaginary lines 30a and 30b, at regular distances between neighbouring deformation elements 32 along each of the imaginary lines 30a and 30b. The deformation elements 32 can be point-shaped, oval-shaped, or elongated welding spots at which the two disc-shaped elements 12a and 12b are welded together. Thus, in the reference configuration of Fig. 3, the circumferential edges 14a, 14b of the disc-shaped elements 12a and 12b need not be mutually welded other than by the deformation elements 32 of the imaginary line 30a.

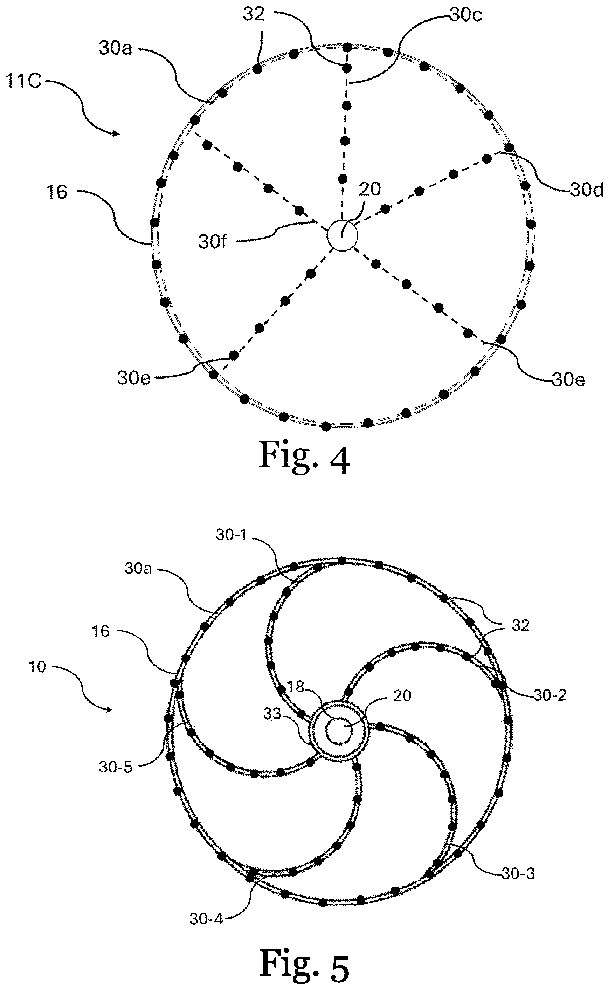

Fig. 4 shows a front side of a rotary cutting disc 11C according to a third reference configuration, which will be compared herein to a rotary cutting disc according to the invention. The front side of Fig. 4 can correspond to a rotary cutting disc having a cross-sectional side view as shown in Fig. 1 and can correspond to the outer surface of any of the first and second disc-shaped elements 12a and 12b.

As shown in Fig. 4, the rotary cutting disc according to the third reference configuration comprises deformation elements 32 formed on the outer surfaces of the disc-shaped elements 12a, 12b thereof along a ring-shaped imaginary line 30a, corresponding to the imaginary line 30a present in the second reference configuration of Fig. 3.

Further, in the third reference configuration shown in Fig. 4, deformation elements 32 are also arranged along five straight radial imaginary lines 30b, 3oc, 30d, 30e and 30f.

The deformation elements 32 are discontinuously arranged along each of the imaginary lines 30a-30f, at regular distances between neighbouring deformation elements 32 along each of the imaginary lines 30a-30f. The deformation elements can be point-shaped, oval-shaped, or elongated welding spots at which the two disc-shaped elements 12a and 12b are welded together. Also in the third reference configuration shown in Fig. 4, the circumferential edges 14a, 14b of the disc-shaped elements 12a and 12b need not be mutually welded other than by the deformation elements 32 of the imaginary line 30a.

Fig. 5 shows a front side of a rotary cutting disc 10 according to an embodiment of the present invention. The front side of Fig. 5 can correspond to a rotary cutting disc having a cross-sectional side view as shown in Fig. 1 and can correspond to the outer surface of any of the first and second disc-shaped elements 12a and 12b.

As shown in Fig. 5, the rotary cutting disc according to the invention comprises deformation elements 32 formed on the outer surfaces of the disc-shaped elements 12a, 12b thereof along five curved elongated imaginary lines 30-1 to 30-5, wherein the imaginary lines 30-1 to 30-5 have a radial distance measured from the centre 20 of the cutting disc 10 that increases along at least a part of the length of the corresponding imaginary line.

Further, the rotary cutting disc 10 of Fig. 5 comprises optional additional deformation elements 32 arranged along a ring-shaped imaginary line 30a, corresponding to the imaginary line 30a present in the second reference configuration of Fig. 3.

Each of the imaginary lines 30-1 to 30-5 extends between an intermediate circumferential limit 33 proximal to the innermost circumferential edge 18 and the imaginary line 30a arranged at the outermost edge 16.

The deformation elements 32 are discontinuously arranged along each of the imaginary lines 30a and 30-1 to 30-5 at regular distances between neighbouring deformation elements 32.

The deformation elements 32 can be point-shaped, oval-shaped, or elongated welding spots at which the two disc-shaped elements 12a and 12b can be welded together. For example, the two disc-shaped elements 12a and 12b can be welded together at their circumferential edges 14a and 14b by the deformation elements 32 arranged along the circular imaginary line 30a. In some embodiments, the two disc-shaped elements 12a and 12b can be welded together by all deformation elements 32. In embodiments in which the deformation elements 32 on the imaginary line 30a are omitted, the two disc-shaped elements 12a and 12b can be directly welded together at their circumferential edges 14a and 14b.

In the exemplary embodiment shown in Fig. 5, five curved elongated imaginary lines 30-1 to 30-5 are formed on each of the disc-shaped elements 12a and 12b. However, the number of imaginary lines 30, and of welding spots along each imaginary line can be different in other embodiments of the invention. Different or equal numbers of deformation elements 32 may be arranged along different ones of the imaginary lines 30-1 to 30-5 and possibly 30a.

In the exemplary embodiment of Fig. 5, the disc-shaped elements 12a and 12b each comprise five curved elongated imaginary lines 30 that have a radial distance to the centre 20 of the cutting disc 10 that increases monotonically along the length of each of the imaginary lines 30-1 to 30-5. The curved elongated imaginary lines 30 of the embodiment shown in Fig. 5 are "spiral-shaped", which however shall not be construed in a strict mathematical sense. In the shown embodiment, the curved elongated imaginary lines 30-1 to 30-5 have the shape of a section of a circle having a centre located at a radial distance from the centre 20 of the disc-shaped element corresponding to half the radius R of the disc-shaped element. In the embodiments shown the radius R of the disc-shaped elements 12a, 12b is R = 400 mm and the centre of the circular path described by the curved elongated imaginary lines 30-1 to 30-5 is located at a radial distance r = R/2 = 200 mm, and the curved elongated imaginary lines 30-1 to 30-5 follow circular paths having a radius r = 200 mm. Please note that this shape is regarded as a "spiral-shaped" in the meaning of the present disclosure. According to this shape, when expressing the shape of the curved elongated imaginary line 30-1 to 30-5 in polar coordinates, this means that the angle coordinate changes monotonically along the length of each of the curved elongated imaginary lines 30-1 to 30-5, and thereby covers an angular range of approximately 80°. The curved elongated imaginary lines 30-1 to 30-5 extend between an intermediate circumferential limit 33 and the cutting edge 16, wherein the intermediate circumferential limit 32 encloses the centre of the cutting disc 10 and has a radius greater than the radius 18 of the innermost circumferential edges 18a, 18b of the disc-shaped elements 12a and 12b.

### EXPERIMENTAL EXAMPLES

In the following, it will be demonstrated that the configuration of the cutting disc according to this invention, as shown for example by the exemplary embodiment illustrated in Fig. 5, allows for higher first resonances and hence for an increase in stiffness during use and improved performance.

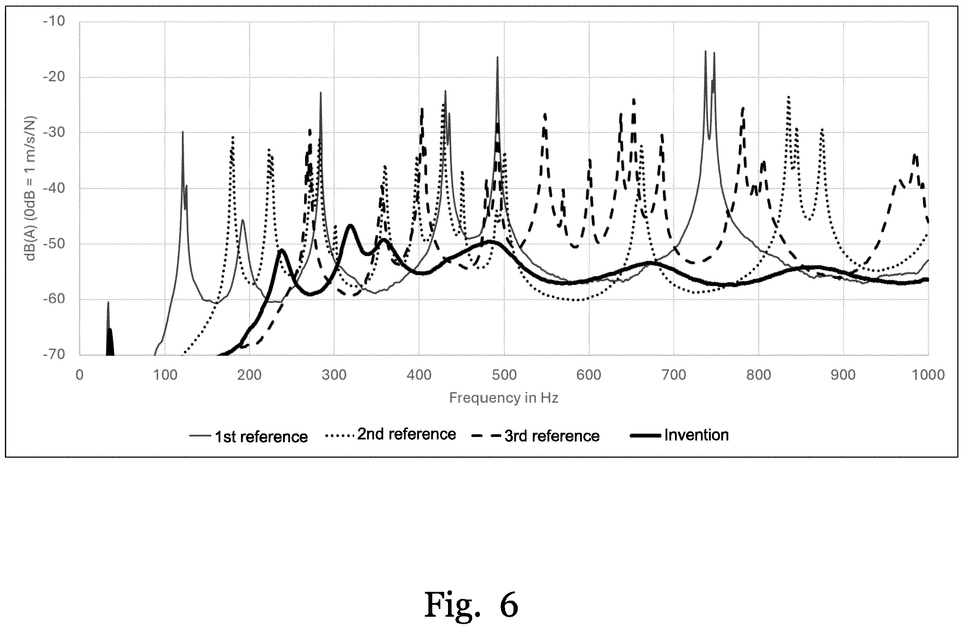

Fig. 6 shows the results of compared measurements of structural vibrations determined for each of the first reference configuration shown in Fig. 2, the second reference configuration shown in Fig. 3, the third reference configuration shown in Fig. 4 and the configuration of a cutting disc according to the present invention corresponding to the exemplary embodiment of Fig. 5.

As seen in Fig. 6 by referring to the horizontal axis of the graph, the first resonant vibrational frequency (the first peak from the left) is found at a frequency of 121 Hz for the first reference configuration shown in Fig. 2, at a frequency of 180 Hz for the second reference configuration shown in Fig. 3, at a frequency of 268 Hz for the third reference configuration shown in Fig. 4 and at a frequency of 238 Hz for the cutting disc according to the present invention shown in Fig. 5. Thus, it can be seen that the first resonant vibrational frequency is almost doubled for the cutting disc according to the present invention as compared to the first reference configuration. Notably, such doubling of the first resonant vibrational frequency implies in practice an increase in stiffness by a factor 4.

To assess the vibrational characteristics of the cutting disc according to the invention and according to the first to third references, an A-weighted, energetically averaged velocity spectrum was measured across all available measurement points on the surface of the discs. The results are summarized in Fig. 6. The levels are expressed in dB(A), using a reference of o dB(A) = 1 m/s/N associated to the first reference, which ensures a clear and consistent association of the measured levels with physical quantities.

For improved comparability between the different configurations and test conditions, a summed level L_{(h,0-1000 Hz)} was calculated from the frequency-dependent spectrum. This summed level represents the total vibrational energy within the frequency range of o to 1000 Hz and is derived by integrating the transmission function h(f) energetically over this frequency band. The transmission function h(f) represents the velocity response per unit excitation force as a function of frequency, and serves as a metric for evaluating the vibrational transmission characteristics of the cutting disc.

By referring to the vertical axis of the graph of Fig. 6,which represents, in a logarithmic scale, the summed level L_{(h,0-1000 Hz)}of transfer behaviour measured in dB(A), with o dB corresponding to a transfer behaviour of 1 m/s/N for the first reference configuration, it is observed that the summed level of the transfer behaviour is - 7 dB for the second reference configuration as compared to the first reference configuration, -7 dB for the third reference configuration as compared to the first reference configuration and -25 dB for the cutting disc according to the invention as compared to the first reference configuration.

The measurements with which the results shown in Fig. 6 were obtained relied on a resolution of the elastic equations of motion (Lamé-Navier or Navier-Cauchy equations) by finite element computations and made use of the software tool Abaqus^{®} by Dassault Systèmes.

Thus, the cutting disc according to the present invention achieves considerably reduced vibration frequencies in use, which implies narrower cutting lines, faster cutting progress and reduced noise emissions.

Further, as compared to the configuration disclosed in EP 3 417 969 A1, the rotary disc configuration according to the present invention presents the relevant technical advantage of allowing for reduced manufacturing costs and complexity.

It is to be understood that what is described above is what is presently considered the preferred embodiment of the present invention. However, it should be noted that the description of the preferred embodiments is given by way of example only and that various modifications may be made without departing from the scope of the invention as defined in the claims.

## Claims

1. A rotary cutting disc (10) comprising:
two coaxial mutually opposed disc-shaped elements (12a, 12b) each having a circumferential edge, wherein circumferential edges (14a, 14b) of the disc-shaped elements (12a, 12b) are joined together forming a cutting edge (16) of the cutting disc (10);
wherein each of the disc-shaped elements (12a, 12b) comprises deformation elements (32) arranged along one or more at least partly curved elongated imaginary lines (30), wherein the one or more imaginary lines (30) have a radial distance from the centre (26) of the cutting disc (10) that increases along at least a part of the length of the deformation line (30).

2. The rotary cutting disc (10) according to claim 1, wherein the deformation elements (32) are discontinuously arranged along the one or more at least partly curved elongated imaginary lines (30).

3. The rotary cutting disc (10) according to claim 2, wherein the deformation elements (32) comprise welding spots, wherein the welding spots preferably weld the two disc-shaped elements (12a, 12b) together.

4. The rotary cutting disc (10) according to any of the preceding claims, wherein the two disc-shaped elements (12a, 12b) form a cavity (24) in between that contains a vacuum, a fluid, preferably a Newtonian or a non-Newtonian fluid, or a damping material, preferably a damping material with viscoelastic properties.

5. The rotary cutting disc (10) according to any of the preceding claims, wherein the disc-shaped elements (12a, 12b) are separated by a separating element (22).

6. The rotary cutting disc (10) according to any of the preceding claims, wherein the separating element (22) and/or the disc-shaped elements (12a, 12b) are configured such that the disc-shaped elements (12a, 12b) assume a lens-shaped geometry, wherein the distance between the disc-shaped elements (12a, 12b) increases at least in part along the radial direction from the cutting edge (16) towards the centre (26) of the cutting disc (10).

7. The rotary cutting disc (10) according to any of the preceding claims, wherein the one or more imaginary lines (30), and possibly the deformation elements (32), formed on different disc-shaped elements (12a, 12b) are arranged in an overlaying configuration, wherein the pattern of imaginary lines (30), and possibly of the deformation elements (32), on the individual disc-shaped elements (12a, 12b) preferably are mirror images of one another, such that they could be arranged in an overlaying configuration in the assembled state of the rotary cutting disc (10), but preferably are offset with respect to each other by a predefined angle.

8. The rotary cutting disc (10) according to any of claims 1 to 6, wherein the pattern of imaginary lines (30), and possibly of the deformation elements (32), as formed on the individual disc-shaped elements (12a, 12b) is identical.

9. The rotary cutting disc (10) according to any of the preceding claims, wherein the deformation elements (32) are formed on an outer surface of the disc-shaped element (12a, 12b) not facing the opposed disc-shaped element (12b, 12a)

10. The rotary cutting disc (10) according to any of the preceding claims, wherein said radial distance of the one or more imaginary lines (30) increases monotonically along the length of the deformation line (30).

11. The rotary cutting disc (10) according to any of the preceding claims, wherein the imaginary lines (30) extend from a first end, corresponding to a radially innermost deformation element, to a second end, corresponding to a radially outermost deformation element, said first end being located within a distance from an innermost circumferential edge (18a, 18b) of the disc-shaped element that is less than 15%, preferably less than 10% of the diameter of the respective disc-shaped element (12a, 12b), wherein the second end of the imaginary lines (30) is preferably located at the cutting edge (16) of the cutting disc (10), or within a distance from said cutting edge (16) that is less than 15%, more preferably less than 10% of the diameter of the respective disc-shaped element (12a, 12b).

12. The rotary cutting disc (10) according to any of the preceding claims, wherein the two disc-shaped elements (12a, 12b) are welded, soldered or glued together.

13. The rotary cutting disc (10) according to any of the preceding claims, wherein each of the disc-shaped elements (12a, 12b) comprises at least 3 imaginary lines (30), preferably between 6 and 20 imaginary lines (30).

14. The rotary cutting disc (10) according to any of the preceding claims, wherein a portion of the imaginary lines (30) extending between a radially innermost deformation element and a radially outermost deformation element, when expressed in polar coordinates, covers an angular range between 1° and 720°, preferably between 10° and 90°, along their length, wherein the value of the angle coordinates preferably increases or decreases monotonically along the length of the imaginary line (30), and/or wherein the imaginary lines (30) preferably have the shape of a section of a circle having a centre located at a radial distance from the centre of the rotary cutting disc (10) corresponding to 35% to 65%, preferably 40% to 60% and most preferably 45% to 55% of the radius of the rotary cutting disc (10).

15. A cutting tool machine comprising:
a rotary cutting disc (10) according to any of the preceding claims; and
a motor (50) for driving a rotation of the rotary cutting disc, wherein the motor preferably is an electric motor.
